# EUROPEAN PATENT APPLICATION

(11) **EP 4 838 057 A1**
(43) Date of publication of application: **11.11.2026**
(21) Application number: 26165880.1
(22) Date of filing: 18.03.2026
(51) Int. Cl.: F01D 17/06, F01D 21/00, F01D 21/02, F01D 21/14, F02C 9/00, F02C 9/28

(54) **SOFTWARE ARCHITECTURE FOR FAIL NH IDLE GOVERNING MODE**

(30) Priority: 05.05.2025 US 202519199025
(71) Applicant: Pratt & Whitney Canada Corp., Longueuil, Québec J4G 1A1 (CA)
(72) Inventor: DARABI, Mostafa, Verdun (CA); DIZON, Ian, Montreal (CA); TANG, Poi Loon, Coquitlam (CA)
(74) Representative: Dehns

(57) **Abstract**

An apparatus comprises an input configured to receive monitoring signals from a sensor (506) monitoring a turboshaft engine (504). An output is configured to provide control signals to the turboshaft engine (504). A controller (502) is configured to initiate a fail NH (high-power shaft speed) idle mode (102) of operation for the turboshaft engine (504) responsive to detection of failure of the sensor (506) through the input. The fail NH idle mode (102) generates control signals for operation of the turboshaft engine (504).

## Description

### TECHNICAL FIELD

This disclosure relates generally to a failure of a sensor within a turboshaft engine. More specifically, this disclosure relates to a fail NH idle control mode for the turboshaft engine responsive to failure of the NL/Q sensor.

### BACKGROUND

Within turboshaft engines, the low-power shaft speed (NL) and the low-power shaft torque (Q) are measured using the NL/Q sensor. Failure of the NL/Q sensor could result in reduced engine performance due to torque mismatching within an operative engine, and the requirement of manually controlling the speed and power of the engine. Certain measures must be in place in order to ensure that the turboshaft engine governs to a constant speed.

### SUMMARY

This disclosure relates to a control mode for a turboshaft engine responsive to failure of a sensor.

In some examples, an apparatus includes an input configured to receive monitoring signals from a sensor monitoring a turboshaft engine, an output configured to provide control signals to the turboshaft engine, and a controller configured to initiate a fail NH (high-power shaft speed) idle mode of operation for the turboshaft engine responsive to detection of failure of the sensor through the input, where the fail NH idle mode generates control signals for operation of the turboshaft engine.

Any single one or any combination of the following features may be used with the examples above. The apparatus where the controller is further configured to detect a failure of the sensor, initiate the fail NH idle mode of the operation for the turboshaft engine responsive to detection of the failure of the sensor, set a mechanical request speed for the turboshaft engine, determine if an NH speed of the turboshaft engine is greater than or less than the mechanical request speed of the turboshaft engine, and control the NH speed responsive to the determination with respect to the NH speed and the mechanical request speed. Responsive to a determination that the NH speed is greater than the mechanical request speed the controller is further configured to step-down an NH max limit from a first level to a current level of the NH speed at a first time t₁, ramp down the NH speed to the mechanical request speed using the NH max limit over a time period from t₁ to t₂, and step-up an NH min limit from a second level to the current level of the NH speed at the first time t₁. Responsive to a determination that the NH speed is less than the mechanical request speed the controller is further configured to: step-up an NH min limit from a first level to a current level of the NH speed at a first time t1, ramp up the NH speed to the mechanical request speed using the NH min limit over a time period from t1 to t2, and step-down an NH max limit from a second level to the current level of the NH speed at the first time t1. The controller is further configured to detect the failure of the sensor responsive to failing to receive signals from the sensor for a predetermined period of time. The controller further may include a CCPU slow system configured to adjust an NH max limit and an NH min limit to control the NH speed. The controller further may include a CCPU fast system configured to modify variable inlet guide vane angles and variable guide vane angles responsive to values from a pre-established table responsive to the fail NH idle mode. The controller further may include a CCPU fast system configured to disable engine matching and to set one engine to an inoperative condition responsive to the fail NH idle mode.

In other examples, a method includes receiving at an input to a controller monitoring signals from a sensor monitoring a turboshaft engine, providing control signals to the turboshaft engine from an output of the controller, initiating a fail NH (high-power shaft speed) idle mode of operation for the turboshaft engine responsive to detection of failure of the sensor through the input using the controller, and generating the control signals for operation of the turboshaft engine responsive to the fail NH idle mode.

Any single one or any combination of the following features may be used with the examples above. The method where the step of initiating further may include detecting a failure of the sensor by the controller, initiating the fail NH idle mode of the operation for the turboshaft engine responsive to detection of the failure of the sensor by the controller, setting a mechanical request speed for the turboshaft engine, determining by the controller if an NH speed of the turboshaft engine is greater than or less than the mechanical request speed of the turboshaft engine, and controlling the NH speed responsive to the determination with respect to the NH speed and the mechanical request speed by the controller. Responsive to a determination that the NH speed is greater than the mechanical request speed the step of controlling further may include stepping down an NH max limit from a first level to a current level of the NH speed at a first time t₁ using the controller, ramping down the NH speed to the mechanical request speed using the NH max limit over a time period from t₁ to t₂ using the controller, and stepping up an NH min limit from a second level to the current level of the NH speed at the first time t₁ using the controller. Responsive to a determination that the NH speed is less than the mechanical request speed the step of controlling further may include stepping up an NH min limit from a first level to a current level of the NH speed at a first time t1 using the controller, ramping up the NH speed to the mechanical request speed using the NH min limit over a time period from t₁ to t₂ using the controller, and stepping down an NH max limit from a second level to the current level of the NH speed at the first time t1 using the controller. The step of detecting further may include detecting the failure of the sensor responsive to failing to receive signals from the sensor for a predetermined period of time. The method may include adjusting an NH max limit and an NH min limit to control the NH speed using a CCPU slow system in the controller responsive to the fail NH idle mode. The method may include modifying variable inlet guide vane angles and variable guide vane angles responsive to values from a pre-established table responsive to the fail NH idle mode using a CCPU fast system in the controller. The method may include disabling engine matching and setting one engine to an inoperative condition responsive to the fail NH idle mode using a CCPU fast system in the controller.

In still other examples, an apparatus includes an input configured to receive monitoring signals from a sensor monitoring a turboshaft engine, an output configured to provide control signals to the turboshaft engine. The apparatus also includes a controller configured to initiate a fail NH (high-power shaft speed) idle mode of operation for the turboshaft engine responsive to detection of failure of the sensor through the input, where the controller is further configured to detect a failure of the sensor, initiate the fail NH idle mode of the operation for the turboshaft engine responsive to detection of the failure of the sensor, set a mechanical request speed for the turboshaft engine, determine if an NH speed of the turboshaft engine is greater than or less than the mechanical request speed of the turboshaft engine, and control the NH speed responsive to the determination with respect to the NH speed and the mechanical request speed.

Any single one or any combination of the following features may be used with the examples above. The apparatus where responsive to a determination that the NH speed is greater than the mechanical request speed the controller is further configured to: step-down an NH max limit from a first level to a current level of the NH speed at a first time t1, ramp down the NH speed to the mechanical request speed using the NH max limit over a time period from t₁ to t₂, and step-up an NH min limit from a second level to the current level of the NH speed at the first time t₁. Responsive to a determination that the NH speed is less than the mechanical request speed the controller is further configured to step-up an NH min limit from a first level to a current level of the NH speed at a first time t₁, ramp up the NH speed to the mechanical request speed using the NH min limit over a time period from t₁ to t₂, and step-down an NH max limit from a second level to the current level of the NH speed at the first time t₁. The controller is further configured to detect the failure of the sensor responsive to failing to receive signals from the sensor for a predetermined period of time.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates the software architecture for the NH idle mode;
FIGURE 2 illustrates the operation of the NH idle mode when the high-power shaft speed (NH) is greater than a mechanical request;
FIGURE 3 illustrates the operation of the NH idle mode when the high-power shaft speed (NH) is less than a mechanical request;
FIGURE 4 illustrates a flow diagram of the operation of the NH idle mode; and
FIGURE 5 illustrates a block diagram of the operating environment of the fail NH idle mode.

### DETAILED DESCRIPTION

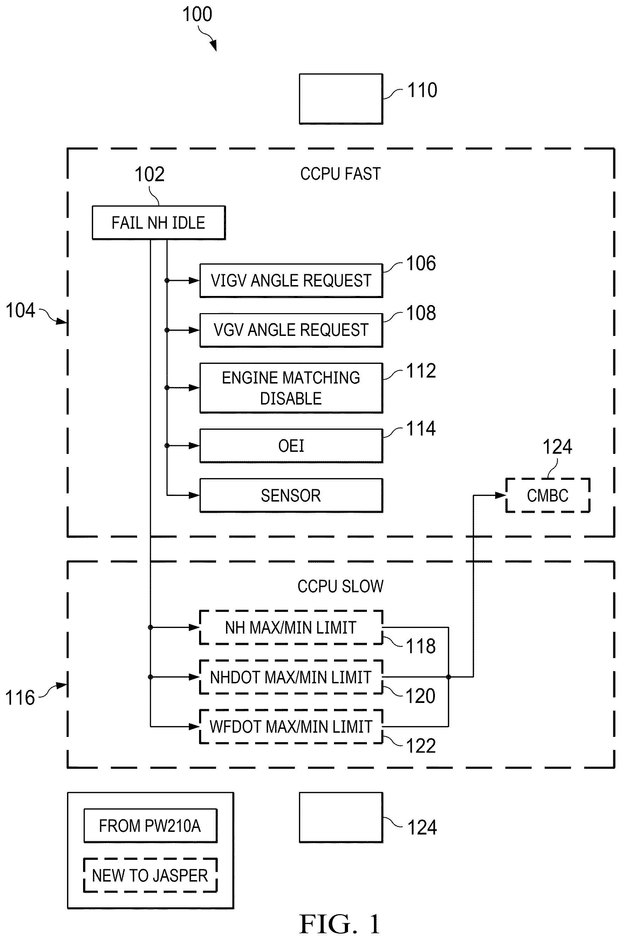

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates the software architecture for the high-power shaft speed fail (NH) idle mode 102. The software architecture of FIGURE 1 illustrates a means for providing a governing fail NH idle mode 102 when a sensor fails. In one embodiment the sensor is a the low-power shaft speed/low-power torque (NL/Q) sensor. However, the failure of other sensors such as VIGV LVDT, VGV LVDT, VIGV Torque Motor or VGV Torque motor sensors may also initiate the fail NH idle mode 102. This will prevent reduced engine performance due to torque mismatching. The fail NH idle mode 102 is a new governing mode that is initiated once the NL/Q sensor experiences a total failure. Once approximately 0.25 seconds have lapsed before additional communications are received from the NL/Q sensor, the control system 100 considers the NL/Q sensor to have failed since no information is being received from the sensor. Due to the NL/Q sensor failure, the turboshaft engine cannot be controlled based upon the NL governing mode and must thus initiate the fail NH idle mode 102. While the descriptions herein are made with respect to an NL/Q sensor, it will be appreciated, that in addition to failure of the NL/Q sensor, failure of the VIGV LVDT, VGV LVDT, VIGV Torque Motor or VGV Torque motor sensors may also initiate the fail NH idle mode 102.

Once the fail NH idle mode 102 is initiated, the CCPU FAST system 104 requests to modify the VIGV (variable inlet guide vanes) angles at 106 and requests to modify the VGV (variable guide vanes) angles at 108. The fail NH idle mode 102 uses a preestablished table 110 using a function of P1, total pressure and T1 to interpolate the VIGV and VGV angles. The fail NH idle mode 102 further disables engine matching at 112 due to the failure of the NL/Q sensor and sets one engine to an inoperative (OEI) condition at 114.

In order to ensure that the high-power shaft speed (NH) governs to a constant speed, the CCPU slow system 116 modifies the NH max/min limits at 118, modifies the NHDOT max/min limit at 120 and modifies the WFDOT max/min limit at 122 using constraint motor based control (CMBC) 125. The NH max/min limits 118 refers to the speed limits. The NHDOT max/min limits 120 refers to the acceleration limits. The WFDOT max/min limits 122 refers to the fuel requirement limits. Both NHDOT limits 120 and WFDOT limits 122 depend on a preestablished table 124 using a function of P1, total pressure and T1 to modify their schedules.

The max limits are typically based on a EO conditions during normal aircraft operation. The min limits are typically based on the ambient conditions of the aircraft. This ensures that NH, NHDOT and WFDOT to not exceed the upper and lower limit when a mechanical request for NH is set.

Although FIGURE 1 illustrates one example of the software architecture for the high-power shaft speed fail (NH) idle mode 102, various changes may be made to FIGURE 1. For example, various components and functions in FIGURE 1 may be combined, further subdivided, replicated, rearranged, or omitted according to particular needs. Also, one or more additional components and functions may be included if needed or desired.

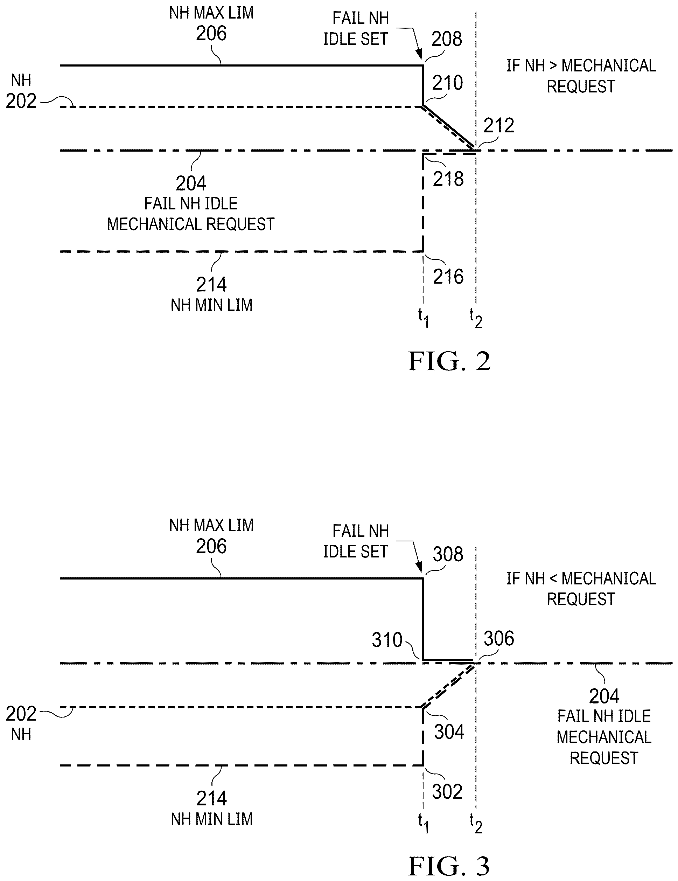

Referring now to FIGURES 2 and 3, there are illustrated the operation of the fail NH idle mode 102 once it is initiated and a mechanical request is set. There are two separate scenarios that must be considered with respect to governing the NH idle mode 102. These include when the NH speed is greater than the mechanical request speed and when the NH speed is less than the mechanical request speed. The mechanical request speed is chosen based on the preestablished table 124 using a function of P1, total pressure and T1 as referenced herein above.

FIGURE 2 illustrates the operation when the existing NH speed 202 is greater than the fail NH idle mechanical request speed 204. When NH speed 202 is greater than the mechanical request speed 204, the NHMAX limit 206 is initially stepped down at 208 until it equals the current level of NH speed 202 at 210. Once the NHMAX limit 206 reaches the NH speed 202, the NHMAX limit 206 is then used to ramp down NH speed 202 at 210 from time t₁ to time t₂ until the level of both NH speed 202 and NHMAX limit 206 reaches the mechanical request speed 204 at 212. The NHMAX limit 206 and NH speed 202 remained at the same speed as the mechanical request speed 204. Next, the NHMIN limit 214 is stepped up at 216 until it equals the mechanical request speed 204 at 218. The NHMIN limit 214 remains constant with the mechanical request speed 204.

Although FIGURE 2 illustrates one example of the operation when the existing NH speed 202 is greater than the fail NH idle mechanical request speed 204, various changes may be made to FIGURE 2. For example, various components and functions in FIGURE 2 may be combined, further subdivided, replicated, rearranged, or omitted according to particular needs. Also, one or more additional components and functions may be included if needed or desired.

FIGURE 3 illustrates the operation when the existing NH speed 202 is less than the fail NH idle mechanical request speed 204. When NH speed 202 is less than the mechanical request speed 204, the NHMIN limit 214 is initially stepped up at 302 until it equals the current level of NH speed 202 at 304. Once the NHMIN limit 214 reaches the NH speed 202, the NHMIN limit 214 is then used to ramp up NH speed 202 at 210 from time t₁ to time t₂ until the level of both NH speed 202 and NHMIN limit 214 reaches the mechanical request speed 204 at 306. The NHMIN limit 214 and NH speed 202 remained at the same speed as the mechanical request speed 204. Next, the NHMAX limit 206 is stepped down at 308 until it reaches the mechanical request speed 204 at 310. The NHMAX limit 206 remains constant with the mechanical request speed 204.

Although FIGURE 3 illustrates one example of the operation when the existing NH speed 202 is less than the fail NH idle mechanical request speed 204, various changes may be made to FIGURE 3. For example, various components and functions in FIGURE 3 may be combined, further subdivided, replicated, rearranged, or omitted according to particular needs. Also, one or more additional components and functions may be included if needed or desired.

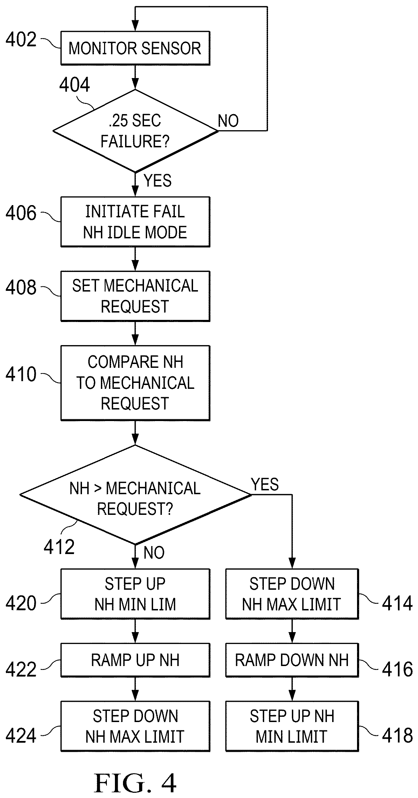

FIGURE 4 illustrates a flow diagram of the operation of the NH idle mode 102. The engine control system will monitor at step 402 the NL/Q sensor or other sensor to ensure they are continuing to receive data from the sensor. Inquiry step 404 determines if data has not been received from the sensor for it period of at least .25 seconds. While one embodiment envisions .25 seconds, any predetermined period of time may be utilized. If inquiry step 404 determines that data continues to be received from the NL/Q sensor, control passes back to step 402 to continue monitoring the sensor. However, once inquiry step 404 detects that there is a failure of the sensor, the fail NH idle mode 102 for the engine is initiated at step 406. The information from table 124 is used to set the mechanical request speed at step 408.

Once the mechanical request speed has been set, the NH speed and mechanical request speed are compared at step 410. Inquiry step 412 determines if the NH speed is greater than the mechanical request speed. If inquiry step 412 determines that the NH speed is greater than the mechanical request speed, the NH max limit is stepped down at step 414. The NHMAX limit is then used to ramp down the NH speed to the mechanical request speed at step 416. The NH minimum limit is stepped up at step 418 until it equals the mechanical request speed.

If inquiry step 412 determines that NH speed is less than the mechanical request speed control passes to step 420 where in the NHMIN limit is stepped up to the NH speed at step 420. The NHMIN limit is then used to ramp up the NH speed at step 422 until it reaches the mechanical request speed. Finally, the NHMAX limit is stepped down at step 424 to the mechanical request speed.

Although FIGURE 4 illustrates one example of a flow diagram of the operation of the NH idle mode 102, various changes may be made to FIGURE 4. For example, while shown as a series of steps, various steps in FIGURE 4 could overlap, occur in parallel, occur in a different order, or occur any number of times (including zero times).

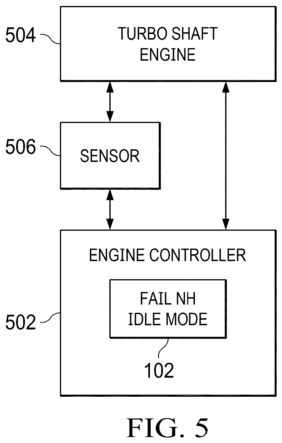

FIGURE 5 illustrates a block diagram of the operating environment of the fail NH idle mode 102. The fail NH idle mode 102 as well as the software architecture illustrated with respect to FIGURE 1 are implemented within an engine controller 502. The engine controller 502 controls the operation of one or more turboshaft engines 504 that are associated with a particular aircraft. The NL/Q sensor 506 monitors the turboshaft engine 504 and provides this information to the engine controller 502. Responsive to the information from the NL/Q sensor 506, the engine controller 502 can implement the fail NH idle mode 102 responsive to failure of the NL/Q sensor 506 that is monitoring the turboshaft engine 504. Once the fail NH idle mode 102 is implemented, the engine controller 502 will control operation of the turboshaft engine 504 in the manner described hereinabove with respect to FIGURES 1-4. As described previously, in addition to controlling turboshaft engine 504 operation responsive to the NL/Q sensor 506 failure, other types of components such as VIGV LVDT, VGV LVDT, VIGV Torque Motor or VGV Torque motor sensors may also initiate the fail NH idle mode 102.

Although FIGURE 5 illustrates one example of a block diagram of the operating environment of the fail NH idle mode 102, various changes may be made to FIGURE 5. For example, various components and functions in FIGURE 5 may be combined, further subdivided, replicated, rearranged, or omitted according to particular needs. Also, one or more additional components and functions may be included if needed or desired.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from scope of this disclosure, as defined by the following claims.

## Claims

1. An apparatus, comprising:
an input configured to receive monitoring signals from a sensor monitoring a turboshaft engine;
an output configured to provide control signals to the turboshaft engine; and
a controller configured to initiate a fail NH (high-power shaft speed) idle mode of operation for the turboshaft engine responsive to detection of failure of the sensor through the input, wherein the fail NH idle mode generates control signals for operation of the turboshaft engine.

2. The apparatus of Claim 1, wherein the controller is further configured to:
detect a failure of the sensor;
initiate the fail NH idle mode of the operation for the turboshaft engine responsive to detection of the failure of the sensor;
set a mechanical request speed for the turboshaft engine;
determine if an NH speed of the turboshaft engine is greater than or less than the mechanical request speed of the turboshaft engine; and
control the NH speed responsive to the determination with respect to the NH speed and the mechanical request speed.

3. The apparatus of Claim 2, wherein responsive to a determination that the NH speed is greater than the mechanical request speed the controller is further configured to:
step-down an NH max limit from a first level to a current level of the NH speed at a first time t₁;
ramp down the NH speed to the mechanical request speed using the NH max limit over a time period from t₁ to t₂; and
step-up an NH min limit from a second level to the current level of the NH speed at the first time t₁.

4. The apparatus of Claim 2 or 3, wherein responsive to a determination that the NH speed is less than the mechanical request speed the controller is further configured to:
step-up an NH min limit from a first level to a current level of the NH speed at a first time t₁;
ramp up the NH speed to the mechanical request speed using the NH min limit over a time period from t₁ to t₂; and
step-down an NH max limit from a second level to the current level of the NH speed at the first time t₁.

5. The apparatus of Claim 2, 3 or 4, wherein the controller is further configured to detect the failure of the sensor responsive to failing to receive signals from the sensor for a predetermined period of time.

6. The apparatus of any of Claims 2 to 5, wherein the controller further comprises a CCPU slow system configured to adjust an NH max limit and an NH min limit to control the NH speed.

7. The apparatus of any preceding Claim, wherein the controller further comprises a CCPU fast system configured to modify variable inlet guide vane angles and variable guide vane angles responsive to values from a pre-established table responsive to the fail NH idle mode; and/or
wherein the controller further comprises a CCPU fast system configured to disable engine matching and to set one engine to an inoperative condition responsive to the fail NH idle mode.

8. A method, comprising:
receiving at an input to a controller monitoring signals from a sensor monitoring a turboshaft engine;
providing control signals to the turboshaft engine from an output of the controller;
initiating a fail NH (high-power shaft speed) idle mode of operation for the turboshaft engine responsive to detection of failure of the sensor through the input using the controller; and
generating the control signals for operation of the turboshaft engine responsive to the fail NH idle mode.

9. The method of Claim 8, wherein the step of initiating further comprises:
detecting a failure of the sensor by the controller;
initiating the fail NH idle mode of the operation for the turboshaft engine responsive to detection of the failure of the sensor by the controller;
setting a mechanical request speed for the turboshaft engine;
determining by the controller if an NH speed of the turboshaft engine is greater than or less than the mechanical request speed of the turboshaft engine; and
controlling the NH speed responsive to the determination with respect to the NH speed and the mechanical request speed by the controller.

10. The method of Claim 9, wherein responsive to a determination that the NH speed is greater than the mechanical request speed the step of controlling further comprises:
stepping down an NH max limit from a first level to a current level of the NH speed at a first time t₁ using the controller;
ramping down the NH speed to the mechanical request speed using the NH max limit over a time period from t₁ to t₂ using the controller; and
stepping up an NH min limit from a second level to the current level of the NH speed at the first time t₁ using the controller; and/or
wherein responsive to a determination that the NH speed is less than the mechanical request speed the step of controlling further comprises:
stepping up an NH min limit from a first level to a current level of the NH speed at a first time t₁ using the controller;
ramping up the NH speed to the mechanical request speed using the NH min limit over a time period from t₁ to t₂ using the controller; and
stepping down an NH max limit from a second level to the current level of the NH speed at the first time t₁ using the controller.

11. The method of Claim 9 or 10, wherein the step of detecting further comprises detecting the failure of the sensor responsive to failing to receive signals from the sensor for a predetermined period of time; and/or
further comprising adjusting an NH max limit and an NH min limit to control the NH speed using a CCPU slow system in the controller responsive to the fail NH idle mode.

12. The method of any of Claims 8 to 11 further comprising modifying variable inlet guide vane angles and variable guide vane angles responsive to values from a pre-established table responsive to the fail NH idle mode using a CCPT fast system in the controller; and/or
further comprising disabling engine matching and setting one engine to an inoperative condition responsive to the fail NH idle mode using a CCPT fast system in the controller.

13. An apparatus, comprising:
an input configured to receive monitoring signals from a sensor monitoring a turboshaft engine;
an output configured to provide control signals to the turboshaft engine;
a controller configured to initiate a fail NH (high-power shaft speed) idle mode of operation for the turboshaft engine responsive to detection of failure of the sensor through the input, wherein the controller is further configured to:
detect a failure of the sensor;
initiate the fail NH idle mode of the operation for the turboshaft engine responsive to detection of the failure of the sensor;
set a mechanical request speed for the turboshaft engine;
determine if an NH speed of the turboshaft engine is greater than or less than the mechanical request speed of the turboshaft engine; and
control the NH speed responsive to the determination with respect to the NH speed and the mechanical request speed.

14. The apparatus of Claim 13, wherein responsive to a determination that the NH speed is greater than the mechanical request speed the controller is further configured to:
step-down an NH max limit from a first level to a current level of the NH speed at a first time t₁;
ramp down the NH speed to the mechanical request speed using the NH max limit over a time period from t₁ to t₂; and
step-up an NH min limit from a second level to the current level of the NH speed at the first time t₁.

15. The apparatus of Claim 13 or 14, wherein responsive to a determination that the NH speed is less than the mechanical request speed the controller is further configured to:
step-up an NH min limit from a first level to a current level of the NH speed at a first time t₁;
ramp up the NH speed to the mechanical request speed using the NH min limit over a time period from t₁ to t₂; and
step-down an NH max limit from a second level to the current level of the NH speed at the first time t₁; and/or
wherein the controller is further configured to detect the failure of the sensor responsive to failing to receive signals from the sensor for a predetermined period of time.
